**Europäisches Patentamt**

**European Patent Office**

**Office européen des brevets**

(11) Veröffentlichungsnummer: **0 301 106**
**A1**

## EUROPÄISCHE PATENTANMELDUNG

veröffentlicht nach Art. 158 Abs. 3 EPÜ

(21) Anmeldenummer: 88901483.3

(51) Int. Cl.⁴: **H 01 S 3/22**

(22) Anmeldetag: **15.01.88**

Daten der zugrundeliegenden internationalen Anmeldung:

(86) Internationale Anmeldenummer:
**PCT/SU 88/00013**

(87) Internationale Veröffentlichungsnummer:
**WO 88/05971 (11.08.88 88/18)**

(30) Priorität: **28.01.87 SU 4186717**

(43) Veröffentlichungstag der Anmeldung: **01.02.89**
**Patentblatt 89/5**

(84) Benannte Vertragsstaaten: **AT BE CH DE FR GB IT LI LU NL SE**

(71) Anmelder: **NAUCHNO-ISSLEDOVATELSKY TSENTR PO TEKHNOLOGICHESKIM LAZERAM AKADEMII NAUK SSSR, Glavpochtambt, sortirovka-NITSTL, Moskovskaya obl. Shatura, 140700 (SU)**

(72) Erfinder: **ALEXANDROV, Andrei Jurievich, ul. Volgina, 9-1-122, Moscow, 117485 (SU)**
Erfinder: **DOLGIKH, Viktor Alexandrovich, ul. Dolgoprudnaya, 3-18, Moscow, 127411 (SU)**
Erfinder: **KERIMOV, Oleg Movsumovich, ul. 2 Pugachevskaya, 3-1-231, Moscow, 107553 (SU)**
Erfinder: **SAMARIN, Alexei Jurievich, ul. Ostrovityanova, 35a-147, Moscow, 117437 (SU)**
Erfinder: **RUDOI, Igor Georgievich, ul. Sportivnaya, 7-44 Moskovskaya obl., Shatura, 140700 (SU)**
Erfinder: **SOROKA, Arkady Matveevich, ul. Novatorov, 4-6-53, Moscow, 117421 (SU)**

(74) Vertreter: **Patentanwälte Beetz sen. - Beetz jun. Timpe - Siegfried - Schmitt-Fumian- Mayr, Steinsdorfstrasse 10, D-8000 München 22 (DE)**

(54) **AKTIVES MEDIUM FÜR GASLASER MIT IONISIERTER TEILCHENERREGUNG.**

(57) Aktives Medium für einen Gaslaser mit einer Anregung durch Ionisierungsteilchen weist Helium, Neon, Argon oder Krypton mit einer Gesamtkonzentration von über $10^{19}$ cm⁻³ bei einer Argon- oder Kryptonkonzentration von $3 \cdot 10^{16}$ cm⁻³ bis zu einem Wert von 15 Prozent der Gesamtkonzentration auf. Es enthält zusätzlich mindestens noch eine Komponente, die aus der Gruppe Xenon, Wasserstoff, Wasserstoffisotop gewählt ist, oder ein Gemisch aus diesen Komponenten in beliebigen Verhältnissen, wobei die Konzentration einer jeden davon oder ihres Gemisches von $10^{15}$ cm⁻³ bis zu einem Wert gewählt wird, der gleich 20 Prozent der Argon- oder Kryptonkonzentration ist.

## AKTIVES MEDIUM FÜR EINEN GASLASER MIT EINER ANREGUNG DURCH IONISIERUNGSTEILCHEN

### Gebiet der Technik

Die vorliegende Erfindung bezieht sich auf die Quantenelektronik und betrifft insbesondere ein aktives Medium für einen Gaslaser mit einer Anregung durch Ionisierungsteilchen.

### Vorheriger Stand der Technik

Es ist ein aktives Medium zur Generation an einem 3p-3a-Übergang von Neon bekannt, das sich aus Helium, Neon mit einer Gesamtkonzentration bis zu $7 \cdot 10^{15}$ $cm^{-3}$ und Argonspuren zusammensetzt und durch eine schnelle elektrische Entladung (Applied Optics, v. 4, n. 5, 1965, May, New York, W.B. Bridges, A.N. Chester "Visible & Lazer Oscillation at 118 Wavelengths in Ionized Neon, Argon, Krypton, Xenon, Oxygen & Other Gases", p. 573 - 580 , p. 573 - 577) angeregt wird. Hier wurde zum erstenmal eine Generation an einem atomaren Neon im sichtbaren Spektralbereich ($\lambda$ = 5852,5 Å) an einem $3p' \left|1/2\right|_0 - 3s' \left|1/2\right|_1$ - Übergang erzielt. Der Laserwirkungsgrad war aber äußerst niedrig, der Kapillarcharakter der Entladung begrenzt die Divergenz der Strahlung auf ein niedriges Niveau, die Generation weist einen sellbstbegrenzenden Charakter von höchstens 10 ns Dauer, was dessen Anwendung beschränkt und die Forderung an eine Pumpquelle wesentlich steigert.

Es ist auch ein aktives Medium zur Generation an einem $3p' \left|1/2\right|_0 - 3a' \left|1/2\right|_1$ - Übergang von Neon ($\lambda$ = 5852,5Å) bekannt, das sich aus Neon und Wasserstoff mit einer Gesamtkonzentration von ca. $2 \cdot 10^{19}$ $cm^{-3}$ bei einer Wasserstoffkonzentration = 30 % zusammensetzt und durch eine elektrische Entladung (Optics Communications, v. 36, n. 3, 1981, February, Amsterdam, D. Schmieder, D.J. Brink, T.I. Salamon, E.G. Jones "A High Pressure 585,3 nm Neon Hydrogen Laser",
p. 223-226) angeregt wird.

Hier wurde zum erstenmal ein quasikontinuierlicher Generationsbetrieb bei $\lambda = 5852,5\text{Å}$ mit einer Dauer bis zu 140 ns realisiert, während der Laserwirkungsgrad niedrig – auf dem Niveau einiger Tausendstel Prozent (bei maximaler Energieerzeugung von $9\mu J$) – blib, beschränkt war auch das Laservolumen.

Der niedrige Wirkungsgrad der genannten Laser ist auf keine optimale Zusammensetzung des aktiven Mediums und auf keine effektive Besetzung des oberen Laserniveaus bei der Anregung durch die elektrische Entladung zurückzuführen.

Es ist auch ein aktives Medium für einen Gaslaser mit einer Anregung durch Ionisierungsteilchen bekannt, das sich aus Helium, Neon und Argon oder Krypton mit einer Gesamtkonzentration von über $10^{19}$ cm$^{-3}$ bei einer Argon- oder Kryptonkonzentration von $3 \cdot 10^{16}$cm$^{-3}$ bis zu einem Wert von 15% der Gesamtkonzentration (SU,A,1344179) zusammensetzt. Hier ist bei einer gemäßigten spezifischen Pumpleistung, die durch verfügbare Ionisierungsstrahlungsquellen im periodischen Impulsbetrieb realisiert werden kann, ein Wirkungsgrad von 1 bis 1,3% bei $\lambda = 5852,5\text{Å}$ und von 0,3 bei $\lambda = 7245$ Å erreicht. Die Anregung durch die Ionisierungsteilchen ermöglicht die Generation in einem großen aktiven Volumen und die Erreichung praktisch einer Beugungsdivergenz bei einer Apertur von 10 cm und mehr. Der Wirkungsgrad wird durch die Besetzungseffektivität des oberen Laserniveaus bestimmt und dürfte 2 bis 2,5% bei $\lambda = 5852,5$ Å und 1 bis 1,5% bei $\lambda = 7245$ Å betragen. Die Erniedrigung des Wirkungsgrades gegenüber dem Grenzwert ist durch eine beträchtliche Nichtresonanzabsorption im aktiven Medium bedingt, was die spezifische Strah-

lungsleistung ebenfalls verringert.

## Offenbarung der Erfindung

Der Erfindung liegt die Aufgabe zugrunde, ein aktives Medium für einen Gaslaser mit einer Anregung durch Ionisierungsteilchen durch Einführung von zusätzlichen Komponenten in dieses zu entwickeln, mit deren Hilfe eine Erhöhung des Wirkungsgrades und der spezifischen Laserstrahlungsleistung an 3p - 3s - Neonübergängen erzielt wird.

Die Aufgabe wird dadurch gelöst, daß ein aktives Medium für einen Gaslaser mit einer Anregung durch Ionisierungsteilchen angeboten wird, das Helium, Neon, Argon oder Krypton mit einer Gesamtkonzentration von über $10^{19}$ cm$^{-3}$ bei einer Argon - oder Kryptonkonzentration von $3 \cdot 10^{16}$ cm$^{-3}$ bis zu einem Wert von 15% der Gesamtkonzentration aufweist, das erfindungsgemäß mindestens noch eine Komponente, die aus der Gruppe: Xenon, Wasserstoff, Wasserstoffisotope gewählt ist, oder ein Gemisch aus diesen Komponenten in beliebigen Verhältnissen enthält, wobei die Konzentration einer jeden davon oder ihres Gemisches von $10^{15}$ cm$^{-3}$ bis zu einem Wert gewählt wird, der gleich 20% der Argon- oder Kryptonkonzentration ist.

## Kurze Beschreibung der Zeichnungen

Die Erfindung soll nachstehend durch eine ausführliche Beschreibung eines erfindungsgemäßen aktiven Mediums unter Bezugnahme auf die beiliegenden Zeichnungen näher erläutert werden. Es zeigt:

Fig. 1 schematisch eine Frontansicht eines Gaslasers mit einer Ionisierungsstrahlung;

Fig. 2 ein kinetisches Schema eines Vorganges des Desaktivierung des unteren Laserniveaus.

- 4 -

### Bevorzugte Ausführungsform der Erfindung

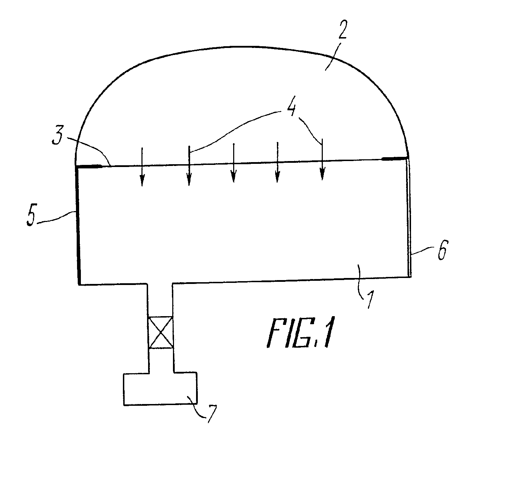

Der Gaslaser (Fig. 1) enthält eine Arbeitskammer 1 für ein aktives Medium und eine Elektronenkanone 2, die durch eine dünne vakuumdichte Folie 3 zum Durchtritt eines Schnellelektronenbündels 4 miteinander kommunizieren. An den Stirnseiten der Kammer 1 sind Spiegel 5, 6 angeordnet, die einen Laserresonator bilden, und sie kommuniziert mit einem System zur Ein- und Ausleitung des aktiven Mediums

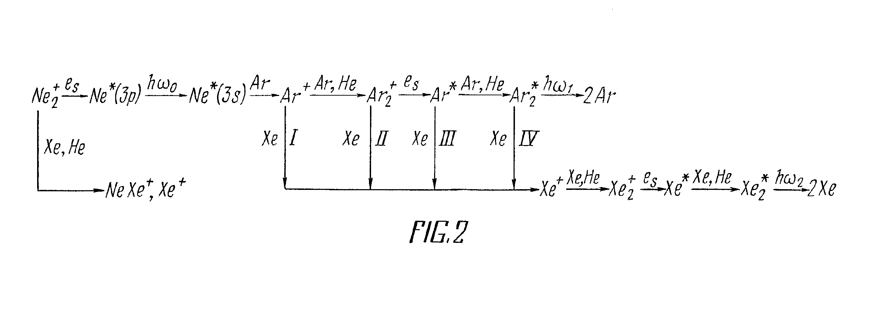

Das aktive Medium kann durch Ionisierungsteilchen unterschiedlicher Natur - Elektronen, Protonen, Röntgenstrahlung, Neutronen, $\alpha$- Teilchen - von entsprechenden Quellen bekannter Konstruktionen angeregt werden. Das in der Elektronenkanone 2 beschleunigte Schnellelektronenbündel 4 tritt durch die Folie 3 über das System 7 in die Arbeitskammer 1 ein, die mit dem erfindungsgemäßen aktiven Medium gefüllt ist, das He, Ne, Ar oder Kr und mindestens noch eine Komponente enthält, die aus der Gruppe: Xenon, Wasserstoff, Wasserstoffisotope mit einer Gesamtkonzentration von über $10^{19}$ $cm^{-3}$ gewählt ist. Die Konzentration von Ar oder Kr wird in Grenzen von $3 \cdot 10^{16}$ $cm^{-3}$ bis zu einem Wert von 15% der Gesamtkonzentration des aktiven Mediums und die Konzentration von Xe, $H_2$, seinem Isotop oder ihrem Gemisch in Grenzen von $10^{15}$ $cm^{-3}$ bis zu einem Wert von 20% der Konzentration von Ar oder Kr gewählt. Bei der Abbremsung im aktiven Medium bilden die Schnellelektronen atomare Ionen, im wesentlichen $He^{+}$, $Ne^{+}$, da die Konzentration dieser Gase die der anderen Komponenten des aktiven Mediums wesentlich übersteigt. In einer Reize von molekularen Ionenreaktionen werden diese Ionen in molekulare Ionen $Ne_2^{+}$ umgesetzt, durch deren dissoziative Rekombination das obere 3p-Laserniveau besetzt wird, wie aus Fig. 2 hervorgeht. Hier sind

$e_s$ "langsame" Sekudärelektronen, die bei der Abbremsung der Schnellelektronen erzeugt werden ; $h\omega_0$ ist ein Laserquant ($\lambda = 5852,5$ Å), $h\omega_1$, $h\omega_2$ bedeuten eine spontane Strahlung von Dimeren von $Ar_2^*$ und $Xe_2^*$, über den Pfeilen sind Teilchen angedeutet, die sich im Zusammenstoß beteiligen. Das untere Laserniveau 3s wird bei Zusammenstößen mit Ar desaktiviert, was ein Ion von $Ar^+$ erscheinen läßt. Infolgedessen stellen sich an den 3p-3s-Neonübergängen eine stationäre Besetzungsinversion und eine Verstärkung ein, während die Spiegel 5 und 6 eine für eine Lasererzeugung erforderliche Rückkoplung ermöglichen. Im weiteren wird in der Kette der gezeigten kinematischen Vorgänge bei Fehlen von Xenon ein Dimer von $Ar_2^*$ gebildet, das unter Emission in zwei Argonatome zerfällt.

Es ist festgestellt, daß die Nichtresonanzabsorption im aktiven Medium gerade durch die Dimere von $Ar_2^*$ ($Kr_2^*$) bedingt ist. Das Vorhandensein der Nichtresonanzabsorption bestimmt die maximale Effektivität $\eta$ der Ausleitung der Strahlung entsprechend der bekannten Formel $\eta = (1 - \sqrt{\beta/\alpha_0})^2$ mit $\alpha_0$, ß koeffizienten einer ungesättigten Verstärkung und einer Nichtresonanzabsorption. Für eine optimale Zusammensetzung des aktiven Mediums, das He, Ne, Ar enthält, ist bei $\lambda = 5852,5$ Å, $\alpha_0 \approx 9\beta$, weshalb $\eta \approx 0,45$ ist. Es ist festgestellt, daß die Einführung von Xe, $H_2$ oder seiner Isotope in einer geringen Konzentration in das aktive Medium als Bestandteile es gestattet, ohne praktisch $\alpha_0$ zu ändern, ß um das 4fache und mehr zu verringern, d.h. $\eta$ auf 0,7 und mehr zu erhöhen, was einer Erhöhung des Wirkungsgrades um das 1,5fache und mehr äquivalent ist. Die Erhöhung des Wirkungsgrades bei konstanter spezifischen Pumpleistung führt naturgemäß auch zur Erhöhung der spezifischen Generationsleistung. Die Verringerung von ß hängt mit einer sprunghaften Verringerung der Konzentration der Dimere von $Ar_2^*$ wegen eines schnellen Ablaufes von Vorgängen I bis IV (Fig. 2) zusammen, die mit den zur Erscheinung von $Ar_2^*$ führenden Vorgängen konkurrieren.

Festgestellt ist, daß die sich in diesem Fall bildenden Dimere von $Xe_2^*$ die Laserstrahlung wesentlich weniger, speziell wegen einer um etwa eine Größenordnung höheren Geschwindigkeit eines spontanen Zerfalls, absorbieren (bei konstanter spezifischer Pumpleistung ist die Konzentration von $Xe_2^*$ ca. 10mal kleiner als von $Ar_2^*$ bei Fehlen von Xenon).

Falls Wasserstoff oder seine Isotope eingesetzt werden, fällt die Konzentration der Dimere von $Ar_2^*$ aus den gleichen Gründen ab, wobei die Evolution der Ionen von $H_2^+$ nach dem Schema $H_2^+ \xrightarrow{H_2} H_3^+ \xrightarrow{e} 3H \longrightarrow H_2$ abläuft und die Laserstrahlung auf allen Stufen überhaupt ausbleibt.

Die minimale Konzentration von Xe, $H_2$ oder seiner Isotope wird durch die Bedingung gegeben, daß wegen des Ablaufes der Vorgange I bis IV (Fig. 2) die stationäre Konzentration von $Ar_2^x$ mindestens um das 1,2fache abnimmt (unter typischen Bedingungen entspricht dies einer Vergrößerung von $\eta$ um 10%). Die maximale Konzentration wird durch die Konkurenz der dissoziativen Rekombination von $Ne_2^+$ mit dessen Umladung bei dreifachen Zusammenstößen (gestrichelte Linie in Fig. 2) bestimmt und ist experimentell ermittelt.

Im angemeldeten aktiven Hochdruck-Medium (mit einer Konzentration oberhalb von $10^{19}$ $cm^{-3}$) wird erstmals eine geringe Konzentration von Xenon, Wasserstoff oder seinen Isotopen eingesetzt, die auf die Effektivität der Besetzung des oberen Laserniveaus und auf die Geschwindigkeit der Desaktivierung des unteren Laserniveaus praktisch ohne Wirkung bleibt, während, wie festgestellt, eine erhebliche Abnahme des Nichtresonanzabsorptions wertes gesichert wird, was eine Erhöhung des Laserwirkungsgrades und der spezifischen Generationsleistung herbeiführt. Hierbei werden alle Vorteile des aktiven Mediums (SU,A,1344179) einschließlich eines Fehlens seiner Degradierung beibehalten.

Nachstehend werden Beispiele einer konkreten Realisierung der vorgeschlagenen Erfindung aufgeführt.

Beispiel 1

Die Elektronenkanone 2 (Fig. 1) generiert ein Schnellelektronenbündel mit einem Querschnitt von $4 \times 34$ cm$^2$ und einer Stromdichte von 1 A/cm$^2$ bei einer Dauer von 1 $\mu$s. Die Titanfolie 3 ist 50 $\mu$m stark, die Energie des Elektronenbündels hinter der Folie beträgt 150 keV. In der Arbeitskammer sind dielektrische Flachspiegel 5,6 angeordnet. Der Spiegel 5 weist einen Reflexionsfaktor von 99,9% bei der Wellenlänge der Generation auf, während der Reflexionsfaktor des Spiegels 6 für die Erzeugung einer maximalen Laserenergie variiert wird. Die Fläche der Spiegel 5,6 beträgt $2 \times 3$ cm$^2$, weshalb das optische Laservolumen $2 \times 3 \times 34 \approx 200$ cm$^3$ ausmacht.

Beim Einpumpen eines aktiven Mediums in die Arbeitskammer, das $5,4 \cdot 10^{19}$ cm$^{-3}$ He (bei 2 at), $4,2 \cdot 10^{18}$ cm$^{-3}$ Ne (bei 120 Torr), $2,1 \cdot 10^{18}$ cm$^{-3}$ Ar (mit einer Argonkonzentration von ca. 3%) (bei 60 Torr) bei einer nahe der optimalen Durchsichtigkeit des Spiegels 6 und R=26% enthält, beträgt die generierte Energie bei $\lambda = 5852,2$ Å ca. 4,2 mJ (Leistung von 4,2 kW; 21 W/cm$^3$), was einem Wirkungsgrad von ca. 0,4% entspricht.

Die Einführung von $3,5 \cdot 10^{16}$ cm$^{-3}$ Xe (1,6% der Argonkonzentration) (bei 1 Torr) und die Ausnutzung des Spiegels 6 mit R = 14% in dieses Medium (die Verringerung der optimalen Durchsichtigkeit ist durch

eine Verringerung von ß bedingt) lassen eine $E_1$ = = 8,5 mJ (Leistung von 8,5 kW; 42 W/cm$^3$) und einen Wirkungsgrad von ca. 0,8 erzielen. Die Verringerung der Konzentration von Xe auf $3,5 \cdot 10^{15}$ cm$^{-3}$ (bei 0,1 Torr) führt zu einer Abnahme der Laserenergie praktisch auf $E_0$ und die Vergrößerung der Konzentration von Xe auf $3,5 \cdot 10^{17}$ cm$^{-3}$ (16% der Konzentration von Ar) (bei 10 Torr) zu einem Abfall der generierten Energie auf 3,5 mJ.

Ähnliche Ergebnisse liefert der Einsatz von Wasserstoff oder Deuterium anstelle von Xe.

Beispiel 2

Die Versuchsanlage ist ähnlich wie im Beispiel 1. Beim Einpumpen eines aktiven Mediums in die Arbeitskammer 1, das $2,7 \cdot 10^{19}$ cm$^{-3}$ He (bei 1 at), $4 \cdot 10^{19}$ cm$^{-3}$ Ne (bei 1,5 at), $6,7 \cdot 10^{18}$ cm$^{-3}$ Kr (bei 190 Torr) (mit einer Kryptonkonzentration von ca. 9%) und mit einem R des Spiegels 6 von 20% enthält, beträgt die generierte Energie bei $\lambda$ = 7245 Å ca. 5 mJ (Leistung 5 kW ; 25 W/cm$^3$), was einem Wirkungsgrad von ca. 0,2% entspricht. Die Einführung von $7 \cdot 10^{16}$ cm$^{-3}$ Xe (bei 2 Torr) (1% der Kryptonkonzentration ) in dieses aktive Medium und die Verkleinerung von R des Spiegels 6 auf 11% gestatten es, eine Laserenergie von 12 mJ (12 kW; 60 W/cm$^3$) zu erreichen, was einem Wirkungsgrad von ca. 0,5% entspricht. Bei einer optimalen Wasserstoffkonzentration von $3,5 \cdot 10^{16}$ cm$^{-3}$ (bei 1 Torr) beträgt die generierte Energie bei $\lambda$ = 7245 Å 11 mJ.

Beispiel 3

Bei einer Versuchsanlage ähnlich wie im Beispiel 1 generiert die Elektronenkanone ein Elektronenbündel mit einer Stromdichte von 40 mA/cm$^2$ bei einer Dauer von 30 Mikrosekunden.

Beim Einpumpen eines aktiven Mediums in die Arbeitskammer 1, das $5,4 \cdot 10^{19}$ cm$^{-3}$ He (bei 2 at), $2 \cdot 10^{18}$ cm$^{-3}$ Ne (bei 60 Torr), $7 \cdot 10^{17}$ cm$^{-3}$ Ar (mit einer Argonkonzentration von ca. 1%) (bei 20 Torr) und mit einem R des Spiegels 6 von 14% enthält, beträgt die generierte Energie bei $\lambda$ = 5852,5 Å ca. 16 mJ (Leistung von 500 W; 2,5 W/cm$^3$), was einem Wirkungsgrad von ca. 1,1% entspricht.

Die Einführung von $1,3 \cdot 10^{16}$ cm$^{-3}$ Xe (2% der Konzentration von Ar) (bei 0,4 Torr) und bei einem R des Spiegels 6 von 8% in das aktive Medium als dessen Bestandteil gestattet es, die Laserenergie auf 23 mJ (Leistung von ca. 800 W; 4 W/cm$^3$) zu steigern und einen Wirkungsgrad von ca. 1,6% zu erreichen. Die Einführung von $10^{16}$ cm$^{-3}$ H$_2$ (bei 0,3 Torr) in das aktive Medium gestattet es, eine Laserenergie von 26 mJ (Leistung von etwa 900 W; 4,5 W/cm$^3$) und einen Wirkungsgrad von ca. 1,8% zu erzielen. Die Verwendung von $7 \cdot 10^{15}$ cm$^{-3}$ Xe (bei 0,2 Tor) und $7 \cdot 10^{15}$ cm$^{-3}$ H$_2$ (bei 0,2 Torr) ergibt eine Laserenergie von 25 mJ. Die Verringerung der Xenonkonzentration (bei Fehlen von Wasserstoff) auf $1,3 \cdot 10^{15}$ cm$^{-3}$ (bei 0,03 Torr) führt zu einer Abnahme der generierten Energie auf 17 mJ, d.h. praktisch auf den ursprünglichen Pegel, während die Vergrößerung der Xenonkonzentration auf $1,8 \cdot 10^{17}$ cm$^{-3}$ (25% der Argonkonzentration) (bei 5 Torr) einen Abfall der Laserenergie auf 13 mJ herbeiführt.

Beispiel 4

Die Versuchsanlage ist die gleiche wie in den Beispielen 1,3. Beim Einpumpen eines aktiven Mediums in die Arbeitskammer 1, das $2,7 \cdot 10^{19}$ cm$^{-3}$ He (bei 1 at), $2,7 \cdot 10^{19}$ cm$^{-3}$ Ne (bei 1 at), $2 \cdot 10^{18}$ cm$^{-3}$ Ar (mit einer Argonkonzentration von 4%) (bei 60 Torr) enthält, beträgt die Laserenergie bei $\lambda$ = 7245 Å ca. 10 mJ (Leistung von ca. 330 W; 1,6 W/cm$^3$), was

- 10 -

einem Wirkungsgrad von 0,35% entspricht. Die Einführung von $3,5 \cdot 10^{16}$ cm$^{-3}$ Xe (bei 1 Torr) in das aktive Medium läßt die Laserenergie auf 22 mJ (Leistung von 700 W; 3,5 W/cm$^3$) und den Wirkungsgrad auf 0,7% steigen. Die Einführung von $3 \cdot 10^{16}$ cm$^{-3}$ H$_2$ (bei 1 Torr) in das aktive Medium erlaubt es, eine Energie von 24 mJ (800 W; 4 W/cm$^3$) zu erzeugen, d.h. der Wirkungsgrad und die spezifische Strahlungsleistung steigen ins Doppelte. Der Einsatz von Deuterium anstelle von Wasserstoff in der gleichen Konzentration ergibt eine Laserenergie von 20 mJ.

Das erfindungsgemäße aktive Medium gestattet es, unter Beibehaltung aller Vorteile des aktiven Mediums gemäß SU,A,1344179 den Wirkungsgrad des Lasers an den 3p - 3s - Übergängen von Neon und dessen spezifische Strahlungsleistung um das 1,5 bis 2fache zu erhöhen.

Gewerbliche Anwendbarkeit

Der Gaslaser mit dem erfindungsgemäßen aktiven Medium wird im Maschienenbau, bei Mitteln für die optische Verbindung, zerstörungsfreie Prüfung, Holografie Anwendung finden.

- 11 -

PATENTANSPRUCH

Aktives Medium für einen Gaslaser mit einer Anregung durch Ionisierungsteilchen, das Helium, Neon, Argon oder Krypton mit einer Gesamtkonzentration von über $10^{19}$ cm$^{-3}$ bei einer Argon- oder Kryptonkonzentration von $3 \cdot 10^{16}$ cm$^{-3}$ bis zu einem Wert von 15% der Gesamtkonzentration aufweist, d a d u r c h g e k e n n z e i c h n e t , daß es mindestens noch eine Komponente, die aus der Gruppe: Xenon, Wasserstoff, Wasserstoffisotop gewählt ist, oder ein Gemisch aus diesen Komponenten in beliebigen Verhältnissen enthält, wobei die Konzentration einer jeden davon oder ihres Gemisches von $10^{15}$ cm$^{-3}$ bis zu einem Wert gewählt wird, der gleich 20% der Argon- oder Kryptonkonzentration ist.

FIG.1

$$Ne_2^+ \xrightarrow{e_s} Ne^*(3p) \xrightarrow{\hbar\omega_0} Ne^*(3s) \xrightarrow{Ar} Ar^+ \xrightarrow{Ar, He} Ar_2^+ \xrightarrow{e_s} Ar^* \xrightarrow{Ar, He} Ar_2^* \xrightarrow{\hbar\omega_1} 2Ar$$

$$\downarrow Xe, He \qquad\qquad Xe \bigg| I \qquad Xe \bigg| II \qquad Xe \bigg| III \qquad Xe \bigg| IV$$

$$\longrightarrow Ne\,Xe^+,\ Xe^+ \qquad\qquad\qquad\qquad\qquad\qquad \longrightarrow Xe^+ \xrightarrow{Xe, He} Xe_2^+ \xrightarrow{e_s} Xe^* \xrightarrow{Xe, He} Xe_2^* \xrightarrow{\hbar\omega_2} 2Xe$$

*FIG. 2*

G0301106

# INTERNATIONAL SEARCH REPORT

International Application No PCT/SU88/00013

## I. CLASSIFICATION OF SUBJECT MATTER (if several classification symbols apply, indicate all) [6]

According to International Patent Classification (IPC) or to both National Classification and IPC

$IPC^4$ - H 01 S 3/22

## II. FIELDS SEARCHED

### Minimum Documentation Searched [7]

| Classification System | Classification Symbols |
|---|---|
| $IPC^4$ | H 01 S 3/22 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | Kvantovaya elektronika, tom 12, No.10, 1985 (Sovetskoe radio, Moscow) F.V.Bunkin et al. "Moschny Ne-$H_2$ lazer s nakachkoi ot malogabaritnogo promyshlennogo uskoritelya" see pages 1993-1994 | I |
| A,P | Kvantovaya elektronika, tom 14, No.5, 1987 (Sovetskoe radio, Moscow) M.I.Lomdev et al. "Issledovanie generatsii v neone pri nakachke samostoyatelnym razryadom s UF predyonizatsiei", see pages 993-995 | I |
| A | Kvantovaya elektronika tom 13, No.3, 1986 (Sovetskoe radio, Moscow) N.G.Basov et al. "O vliyanii Ne na energeticheskie kharakteristiki lazerov vysokogo davlenia s nakachkoi elektronnym puchkom na smesyakh He-Ar,Kr,Xe," see pages 488-492 | I |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 10 March 1988 (10.03.88) | 28 April 1988 (28.04.88) |

| International Searching Authority | Signature of Authorized Officer |
|---|---|
| ISA/SU | |

Form PCT/ISA/210 (second sheet) (January 1985)